**Europäisches Patentamt**

**European Patent Office**

**Office européen des brevets**

(19)

(11) Veröffentlichungsnummer : **0 272 200 B1**

(12)

# EUROPÄISCHE PATENTSCHRIFT

(45) Veröffentlichungstag der Patentschrift :
05.06.91 Patentblatt 91/23

(51) Int. Cl.$^5$ : **H01R 9/24, H04Q 1/14**

(21) Anmeldenummer : **87730135.8**

(22) Anmeldetag : **27.10.87**

(54) Anschlussleiste für die Fernmeldetechnik.

(30) Priorität : **19.12.86 DE 3644349**

(43) Veröffentlichungstag der Anmeldung :
**22.06.88 Patentblatt 88/25**

(45) Bekanntmachung des Hinweises auf die Patenterteilung :
**05.06.91 Patentblatt 91/23**

(84) Benannte Vertragsstaaten :
**AT BE CH DE ES FR GB GR IT LI LU NL SE**

(56) Entgegenhaltungen :
**EP-A- 0 017 163**
**EP-A- 0 165 335**
**GB-A- 2 135 531**
**US-A- 3 760 328**

(73) Patentinhaber : **KRONE Aktiengesellschaft**
**Beeskowdamm 3-11**
**W-1000 Berlin 37 (DE)**

(72) Erfinder : **Klaiber, Eberhard**
**Haupstrasse 134**
**W-1000 Berlin 62 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Anschlußleiste für die Fernmeldetechnik gemäß dem Oberbegriff des Anspruches 1.

Eine solche Anschlußleiste ist aus der DE 34 15 369 vorbekannt. Diese Anschlußleiste hat zwei Reihen von als Schlitzkammern ausgebildeten Anschlußkammern für als Schneidklemmkontakte ausgebildete Anschlußkontakte sowie eine zwischen diesen angeordnete Reihe von Steckbuchsen mit Kontaktelementen, die mit den Anschlußkontakten elektrisch leitend verbunden sind. Diese Steckbuchsen dienen der Aufnahme von Steckkontakten eines Überspannungsableitermagazines. Zur Prüfung der vollständig verdrahteten Anschlußleiste muß das Überspannungsableitermagazin aus den Steckbuchsen herausgezogen werden, um in die Steckbuchsen Prüfstecker einstecken zu können. Nachteilig bei dieser bekannten Anschlußleiste ist es somit, daß eine Prüfung der vollständig verdrahteten Anschlußleiste nur ohne Überspannungsschutz erfolgen kann. Nachteilig ist ferner, daß sich durch das aufgesteckte Überspannungsableitermagazin die Bauhöhe der Anschlußleiste erheblich vergrößert, so daß ein größerer Platzbedarf beim Einbau der Anschlußleiste in ein Gehäuse, z. B. einen Endverzweiger, benötigt wird.

Es ist ferner aus der DE 33 06 263 eine weitere Anschlußleiste für die Fernmeldetechnik bekannt, bei welcher zwischen zwei Reihen von Anschlußkammern für die Anschlußkontakte der Kabeladern eine nach oben offene Kammer zur Aufnahme des Überspannungsableitermagazines vorgesehen ist.

Hierdurch wird zwar die Bauhöhe der Anschlußleiste bei eingestecktem Überspannungsableitermagazin erheblich verringert, eine Prüfung der vollständig verdrahteten Anschlußleiste ist jedoch auch erst nach dem Abziehen des Überspannungsableitermagazines möglich.

Es ist schließlich aus der älteren, nicht vorveröffentlichten DE 36 14 592 (keröffenthöhtam 23.7.87) eine weitere Anschlußleiste vorbekannt, bei welcher die ankommenden Kabeladern fest an in Schlitzkammern des Kunststoffgehäuses angeordneten Schneidklemmkontakten und die abgehenden Kabeladern an Schneidklemmkontakten von Steckern angeschlossen sind, welche in Steckkammern des Kunststoffgehäuses einsetzbar und deren Steckkontakte in Steckbuchsen im Boden der Steckkammern einsteckbar sind. Die Steckbuchsen im Boden der Steckkammern für die Stecker der abgehenden Kabeladern dienen hierbei auch zum Einstecken der Prüfstecker, so daß zum Einstecken von Prüfsteckern erst die Stecker der abgehenden Kabeladern aus der Anschlußleiste herausgezogen werden müssen. Bei dieser Anschlußleiste ist es auch nicht möglich, eine Prüfung bei vollständiger Verdrahtung vorzunehmen, obwohl innerhalb des Kunststoffgehäuses Aufnahmekammern für Überspannungsableiter ausgebildet sind, welche über Kontaktelemente mit den Anschlußkontakten der Kabeladern elektrisch leitend verbunden sind.

Der Erfindung liegt die Aufgabe zugrunde, eine Anschlußleiste der gattungsgemäßen Art zu schaffen, welche das Einstecken von Prüfsteckern für eine Doppelader in die Steckbuchsen bei angeschlossenen ankommenden und abgehenden Kabeladern unter gleichzeitigem Schutz durch die Überspannungsableiter ermöglicht, wobei das Bauvolumen der Anschlußleiste klein gehalten werden soll.

Die Lösung dieser Aufgabe ergibt sich aus den kennzeichnenden Merkmalen des Anspruches 1. Bei der erfindungsgemäßen Anschlußleiste sind die Überspannungsableiter mit der ersten Reihe von in Steckbuchsen ausgebildeten Kontaktelementen verbunden. Ferner ist im Kunststoffgehäuse außerhalb des für die Überspannungsableiter benötigten Bauraumes mindestens eine zusätzliche, zweite Reihe von mit Kontaktelementen für die Prüfstecker versehenen Steckbuchsen vorgesehen. Diese weiteren Steckbuchsen können entweder unmittelbar neben den Überspannungsableitern vorgesehen sein, die in ihre zugehörigen Steckbuchsen eingesteckt sind, oder in besonders zweckmäßiger Weise zwischen je zwei benachbarten Anschlußkammern für Anschlußkontakte der Kabeladern, insbesondere Dropwire-Kabeladern. Die erfindungsgemäße Anschlußleiste ermöglicht somit das Einstecken von Prüfsteckern zu Prüfzwecken bei gleichzeitig vollständig angeschlossenen ankommenden und abgehenden Kabeladern sowie bei gleichzeitigem Schutz der kabeladern durch die Überspannungsableiter.

Die Überspannungsableiter können in einem Überspannungsableitermagazin aufgenommen sein, das mit seinen Steckkontakten in die hierfür vorgesehene Reihe von mit Kontaktelementen versehenen Steckbuchsen eingesteckt ist. Erfindungsgemäß ist zusätzlich vorgesehen, daß im Kunststoffgehäuse selbst Aufnahmekammern für die Überspannungsableiter vorgesehen sind, welche über zugeordnete Kontaktelemente mit den jeweiligen Anschlußkontakten elektrisch leitend verbunden sind. In beiden Fällen müssen zur elektrischen Prüfung der Kabeladern weder die Überspannungsableiter aus dem Kunststoffgehäuse herausgenommen noch die Kabeladern aus den Anschlußkontakten, insbesondere Schneidklemmkontakten, herausgezogen werden, so daß die Anschlußleiste bei angeschlossenen ankommenden und abgehenden Kabeladern und im geschützten Zustand durch die Überspannungsableiter geprüft werden kann.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles einer Anschlußleiste für die Fernmeldetechnik näher erläutert.

Es zeigen :

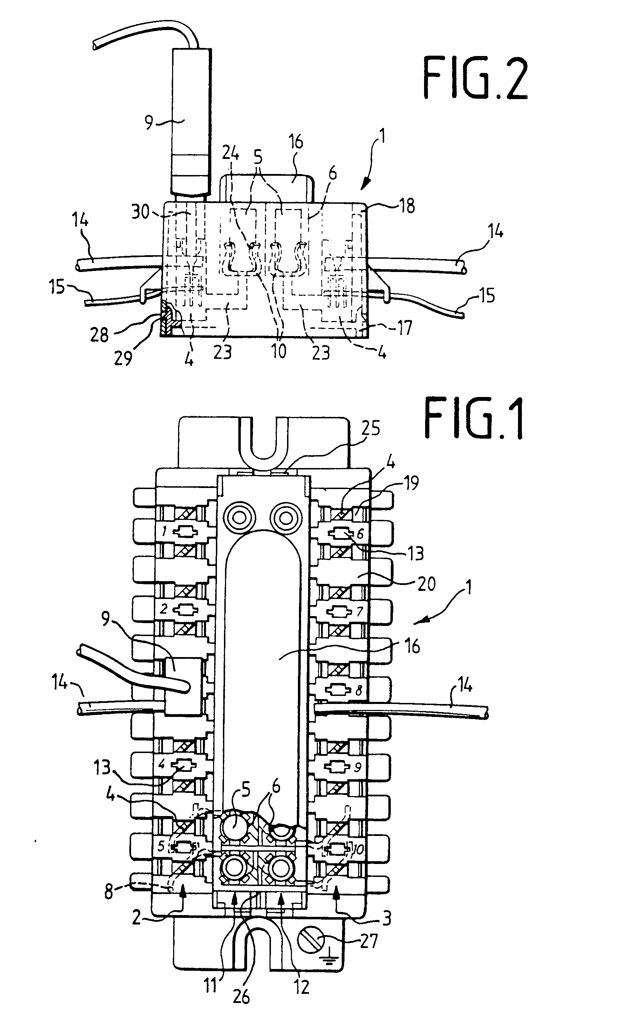

Fig. 1 Eine teilweise aufgeschnittene, vereinfachte Draufsicht,

Fig. 2 einen Schnitt gemäß der Linie II-II in Fig 1,

Fig. 3 ein Schneidklemmkontaktelement mit daran befindlichem Anschlußkontakt für einen Überspannungsableiter in der Draufsicht und

Fig. 4 das Anschlußelement gemäß Fig. 3 in Ansicht.

Die Anschlußleiste besteht aus einem Kunststoffkörper 1 aus einem unteren und einem oberen Gehäuseteil 17, 18. Diese sind durch am oberen Gehäuseteil 18 vorgesehene Rastöffnungen 29 und am unteren Gehäuseteil 17 vorgesehene Rasthaken 28 miteinander verrastet. Das obere Gehäuseteil 18 besitzt zwei Reihen 2, 3 von nach oben offenen Schlitzkammern 19, die durch Stegwände 20 getrennt sind.

Zwischen den beiden an den Längsseiten der Anschlußleiste angeordneten Schlitzkammern 19 sind entsprechend der Anzahl der Schlitzkammern 19 zwei Reihen 11, 12 von quadratischen Aufnahmekammern 6 vorgesehen, welche zur Aufnahme von Überspannungsableitern 5 dienen. In den Stegwänden 20 zweier benachbarter Schlitzkammern 19 sind Einsteckbuchsen 13 angeordnet, deren Innenkontur dem Einsteckteil 30 eines Prüfsteckers 9 angepaßt ist.

In jeder der Schlitzkammern 19 der beiden Reihen 2, 3 sind Schneidklemmkontakte 4 aus federndem, metallischem, elektrisch leitendem Werkstoff aufgenommen. Die Schneidklemmkontakte 4 besitzen einen Kontaktschlitz 21, der oberhalb eines U-förmigen, dem Kontaktschlitz 21 kreuzenden Querschlitzes 22 breiter ausgebildet als unterhalb des U-förmigen Querschlitzes 22.

In jedem Kontaktschlitz 21 eines jeden Schneidklemmkontaktes 4 können daher ein dünnes Standardkabel 15 und ein dickes Dropwirekabel 14 angeschlossen werden.

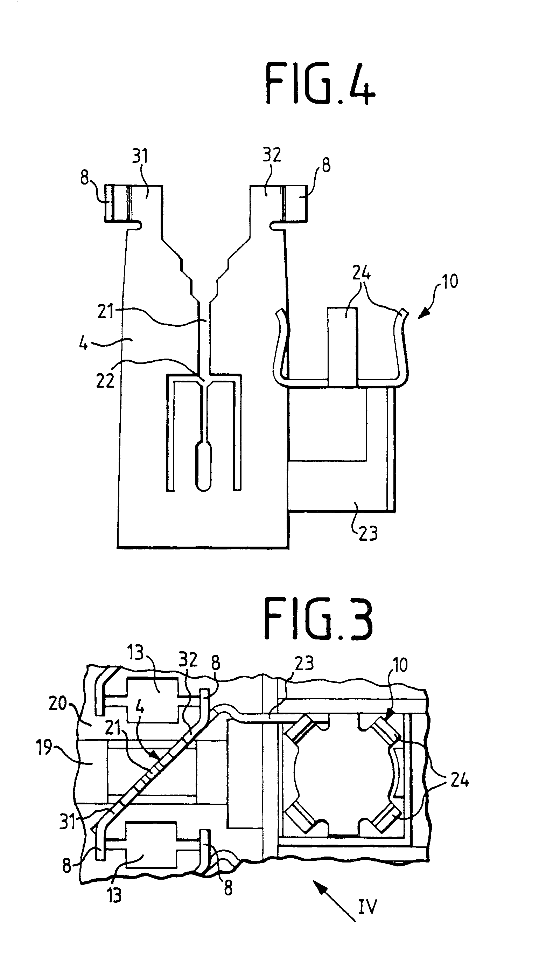

Wie es die Figuren 3 und 4 zeigen, ist mit jedem Schneidklemmkontakt 4 über einen Verlängerungssteg 23 ein Steckkontakt in Form eines Kronenkontaktes 10 fest verbunden, dessen Zähne 24 nach oben in die zugehörige Aufnahmekammer 6 gerichtet sind.

Darüber hinaus weist jeder Schneidklemmkontakt 4 außen an beiden oberen Enden der beiden der Schlitz 21 bildenden Schenkel 31, 32 jeweils einen umgebogenen Abgriffkontakt 8 auf, der aus der Schlitzkammer 19 des oberen Gehäuseteiles 18, in welches der Schneidklemmkontakt 4 unter einem Winkel von 45° zur Drahtachse eingesetzt ist, in eine Einsteckbuchse 13 hineinragt, welche in einer Stegwand 20 ausgebildet ist.

Über den nach oben offenen Aufnahmekammern 6 für die Überspannungsableiter 5 ist eine metallische Erdschiene 16 vorgesehen, welche an einer Stirnseite des Kunststoffgehäuses 1 mit einer Schwenkeinrichtung 25 verbunden und an der anderen Stirnseite des Kunststoffgehäuses 1 über eine Rasteinrichtung 26 mit dem Kunststoffgehäuse 1 verrastbar ist. Die in die Aufnahmekammern 6 eingesteckten Überspannungsableiter 5 werden somit von unten durch die Kronenkontakte 10 und von oben durch die Erdschiene 16 kontaktiert.

Die Erdschiene 16 ist elektrisch mit einem Erdanschluß 27 der Anschlußleiste verbunden. Im Überspannungsfall fließt somit der über die Kabeladern 14, 15 fließende Überstrom über den Schneidklemmkontakt 4 und den Kronenkontakt 10 durch den Überspannungsableiter 5 an die Erdschiene 16 zum Erdanschluß 27.

Bei durch die Überspannungsableiter 5 gesicherter Anschlußleiste können zur elektrischen Prüfung der Kabeladern 14, 15 Prüfstecker 9 in die zugehörigen Einsteckbuchsen 13 eingesteckt werden, womit eine Verbindung zu zwei Schneidklemmkontakten 4 einer Doppelader 14, 15 hergestellt ist.

## Ansprüche

1. Anschlußleiste für die Fernmeldetechnik aus einem Kunststoffgehäuse (17, 18) mit mindestens einer Reihe (2, 3) von in Anschlußkammern (19) angeordneten Anschlußkontakten (4) für Kabeladern (14, 15), insbesondere Dropwire-Kabeladern, und mit einer Reihe von in Steckbuchsen (6) ausgebildeten Kontaktelementen (10) für Überspannungsableiter (5), **dadurch gekennzeichnet,** daß im Kunststoffgehäuse (1) außerhalb des für die Überspannungsableiter (5) benötigten Bauraumes eine zweite Reihe von mit Kontaktelementen (8) versehenen Steckbuchsen (13) für Prüfstecker (9) vorgesehen ist.

2. Anschlußleiste nach Anspruch 1, **dadurch gekennzeichnet,** daß die Steckbuchsen (13) für die Prüfstecker (9) zwischen je zwei benachbarten Anschlußkammern (19) der Reihe (2, 3) von Anschlußkontakten (4) angeordnet ist.

3. Anschlußleiste nach Anspruch 2, **dadurch gekennzeichnet,** daß in die Steckbuchsen (13) für die Prüfstecker (9) je ein Abgriffkontakt (8) der beiden benachbarten Anschlußkontakte (4) eingreift.

4. Anschlußleiste nach einem der Ansprüche 1 bis 3, **dadurch gekennzeichnet,** daß die Steckbuchsen für die Überspannungsableiter (5) als im Kunststoffgehäuse (1) ausgeformte und mit Kontaktelementen (10) versehene Aufnahmekammern (6) für die Überspannungsableiter (5) ausgebildet sind.

5. Anschlußleiste nach Anspruch 4, **dadurch gekennzeichnet,** daß die Aufnahmekammern (6) für die Überspannungsableiter (5) zwischen zwei Reihen (2, 3) von im Kunststoffgehäuse (1) ausgebildeten Anschlußkammern (19) für die Anschlußelemente (4) ausgebildet sind.

6. Anschlußleiste nach einem Anspruch 4 oder 5, **dadurch gekennzeichnet,** daß die in den Aufnahmekammern (6) für die Überspannungsableiter (5) angeordneten Kontaktelemente (10) federnd ausgebildet sind.

7. Anschlußleiste nach einem der Ansprüche 4 bis 6, **dadurch gekennzeichnet,** daß die Aufnahmekammern (6) für die Überspannungsableiter (5) von einer auf das Kunststoffgehäuse (1) aufrastbaren Erdschiene (16) überbrückt sind.

## Revendications

1. Bloc de connexion pour les télécommunications, comportant un boîtier plastique (17, 18) avec au moins une file (2, 3) de contacts de connexion (4) disposés dans des chambres de connexion (19) pour des conducteurs (14, 15) en particulier câbles dropwire, et avec une file d'éléments de contact (10) agencés dans des douilles d'introduction (6) pour des éclateurs déchargeurs (5), **caractérisé en ce que** dans le boîtier plastique (1), à l'extérieur de l'espace nécessaire pour les éclateurs déchargeurs (5), une deuxième file de douilles d'introduction (13) pourvues d'éléments de contact (8) pour des fiches de test (9) est prévue.

2. Bloc de connexion selon la revendication 1, **caractérisé en ce que** les douilles d'introduction (13) pour les fiches de test (9) sont disposées chacune entre deux chambres de connexion (19) voisines de la file (2,3) de contacts de connexion (4).

3. Bloc de connexion selon la revendication 2, **caractérisé en ce que** les douilles d'introduction (13) pour les fiches de test (9), un contact de prise (8) chacun des deux contacts de connexion (4) voisins s'engage.

4. Bloc de connexion selon une des revendications 1 à 3, **caractérisé en ce que** les douilles d'introduction pour les éclateurs déchargeurs (5) sont agencées comme des chambres de logement (6) moulées dans le boîtier plastique (1) et prévues d'éléments de contact (10) pour les éclateurs déchargeurs (5).

5. Bloc de connexion selon la revendication 4, **caractérisé en ce que** les chambres de logement (6) pour les éclateurs déchargeurs (5) sont agencés entre deux files (2, 3) de chambres de connexion (19) pour les éléments de connexion (4) agencées dans le boîtier plastique (1).

6. Bloc de connexion selon la revendication 4 ou 5, **caractérisé en ce que** les éléments de contact (10) disposés dans les chambres de logement (6) pour les éclateurs déchargeurs (5) sont élastiques.

7. Bloc de connexion selon une des revendications 4 à 6, **caractérisé en ce que** les chambres de logement (6) pour les éclateurs déchargeurs (5) sont superposées d'un rail (16) à la terre encliquetable sur le boîtier plastique (1).

## Claims

1. A connecting block for the telecommunications, including a plastic housing (17, 18) with at least one row (2, 3) of connecting contacts (4) for cable conductors (14, 15), in particular dropwire cable conductors, disposed in connection chambers (19), and with a row of contact elements (10) being adapted in sockets (6) for surge arresters, **characterized by** that in the plastic housing (1), outside the space required for the surge arresters (5), there is provided a second row of sockets (13) comprising contact elements (8) for the test plugs (9).

2. A connecting block according to claim 1, **characterized by that** the sockets (13) for the test plugs (9) are disposed between two adjacent connection chambers (19) each of the row (2, 3) of connecting contacts (4).

3. A connecting block according to claim 2, **characterized by that** into the sockets (13) for the test plugs (9) engages one tapping contact (8) each of the two adjacent connecting contacts (4).

4. A connecting block according to one of claims 1 to 3, **characterized by that** the sockets for the surge arresters (5) are adapted as receiving chambers (6) for the surge arresters (5) moulded in the plastic housing (1) and provieded with contact elements (10).

5. A connecting block according to claim 4, **characterized by that** the receiving chambers for the surge arresters (5) are disposed between two rows (2, 3) of connection chambers (19) provided in the plastic housing (1).

6. A connecting block according to claims 4 or 5, **characterized by that** the contact elements (10) disposed in the receiving chambers (6) for the surge arresters (5) are resilient.

7. A connecting block according to one of claims 4 to 6, **characterized by that** the receiving chambers (6) for the surge arresters (5) are bridged by an earth rail (16) to be latched on the plastic housing (1).

FIG.2

FIG.1

# FIG.4

# FIG.3